# EUROPÄISCHE PATENTSCHRIFT

(11) **EP 2 166 705 B1**
(45) Veröffentlichungstag und Bekanntmachung des Hinweises auf die Patenterteilung: **02.02.2011**
(21) Anmeldenummer: 08164789.3
(22) Anmeldetag: 22.09.2008
(51) Int. Cl.: H04L 12/26

(54) **Verfahren, System und Signal-Generator zur Qualitätsbestimmung einer IP-Netzwerk-Verbindung**
Method, system and signal generator for determining the quality of an IP network connection
Procédé, système et générateur de signal destinés à la détermination de la qualité d'une liaison de réseau IP

(43) Veröffentlichungstag der Anmeldung: 24.03.2010
(73) Patentinhaber: VOIPFUTURE LTD., 20537 Hamburg (DE)
(72) Erfinder: Zäncker, Olaf, 23843, Bad Oldesloe (DE); Krüger, Michael, 25337, Koelln-Reisiek (DE); Otto, Steffen, 22303, Hamburg (DE)
(74) Vertreter: Vossius & Partner

(56) Entgegenhaltungen:
- EP-A- 1 793 528
- US-A1- 2002 167 937
- US-A1- 2003 048 812
- US-A1- 2006 104 218

## Beschreibung

Die Erfindung betrifft das Gebiet der Internet-Telefonie, kurz VoIP (Voice over Internet Protocol). Insbesondere betrifft die Erfindung ein Verfahren, ein System und einen Signal-Generator zur Qualitätsbestimmung einer IP-Netzwerk-Verbindung.

VoIP (Voice over Internet Protocol) ist eine Technologie welche es ermöglicht, den kontinuierlichen Audiostrom eines Telefonates in Form von Datenpaketen über ein paketorientiertes Netzwerk (IPNetzwerk) zu übertragen. Im Gegensatz zu sonstigem Datenverkehr in IP-Netzwerken erfordert das Medium Sprache (Audio) wenn es in Form von Datenpaketen übertragen werden soll, einen kontinuierlichen Datenfluss, der Pakete in immer gleichen zeitlichen Abständen (isochron) überträgt. IP-Netzwerke sind jedoch grundsätzlich nicht dafür ausgelegt, die isochrone Übertragung eines Stromes von Datenpaketen zu gewährleisten. Darüber hinaus konkurrieren die VoIP-Datenpakete mit den Datenpaketen anderer Anwendungen um die selbe Übertragungsinfrastruktur (IP-Netzwerk und dessen aktive Komponenten). Beim IP-Netzwerk kann es sich dabei um ein lokales Datennetz (LAN) und/oder eine Weitverkehrsnetz (WAN) handeln.

Infolge dessen unterliegt der VoIP-Datenverkehr zahlreichen Störeinflüssen mit dem Resultat schlechter Qualität - z.B. schlechter Sprachqualität. Zur weitestgehenden Vermeidung schlechter Qualität empfehlen die Hersteller von VoIP-Systemen üblicherweise, die IP-Netzwerke vor dem geplanten Einsatz eines VoIP-Systems auf ihre VoIP-Fähigkeit hin zu untersuchen. Diese Untersuchung (auch VoIP-Assessment, VoIP Pre-Deployment, etc., genannt) erfolgt, indem künstlicher VoIP-Verkehr in das zu untersuchende IP-Netzwerk eingespeist und nach der Übertragung auf seine Qualität hin bewertet wird. Im Falle schlechter Untersuchungsergebnisse kann das IP-Netzwerk in seiner Leistung erweitert werden (mehr Bandbreite, Priorisierung von Verkehr, physikalische und/oder logische Restrukturierung, andere aktive Komponenten, etc.).

Soll ein IP-Netzwerk auf seine VoIP-Fähigkeit hin untersucht werden, so muss künstlicher VoIP-Verkehr von sog. Last- bzw. Call-Generatoren bereitgestellt werden. Der künstlich erzeugte VoIP-Verkehr muss dabei dem VoIP-Verkehr des, für den späteren Einsatz geplanten Geraites entsprechen. Weiterhin muss der künstliche VoIP-Verkehr den Anforderungen an ein störungsfreies, ideales Mess-Signal (z.B. isochron, vollständig, in der korrekten Reihenfolge, etc.) genügen.

Da VolP-Calls nur zwischen einem Sender und einem Empfänger (als Gegenstelle) bestehen können, besitzen die Call-Generatoren in der Regel auch die Möglichkeit, die VoIP-Calls zu empfangen bzw. zu terminieren. Für die Erzeugung eines VoIP-Calls sind somit immer zwei Instanzen erforderlich - ein sendender und ein empfangender Call-Generator. Der empfangende Call-Generator nimmt nun an Hand des empfangenen Mess-Signals eine Beurteilung des IP-Netzwerkes in Bezug auf dessen VoIP-Fähigkeit vor. Das empfangene Mess-Signal unterliegt jedoch zwei sich überlagernden, unterschiedlichen Einflüssen - dem des zu untersuchenden IP-Netzwerkes und dem des sendenden Call-Generators. In der Praxis wird jedoch grundsätzlich davon ausgegangen, dass das vom Call-Generator erzeugte Mess-Signal eine geeignete (gute) Qualität aufweist - schlechte Qualität wird somit ausschließlich dem IP-Netzwerk zugeschrieben. Darüber hinaus sind die Auswerteverfahren auf der Empfängerseite zudem durch die Kalkulation eines Qualitäts-Faktors häufig sehr ungenau und erlauben kein sicheres Unterscheiden von guter und schlechter Qualität. Auf gar keinen Fall ist es mit diesen Verfahren möglich, im Falle von schlechter Qualität zu unterscheiden, ob diese dem zu untersuchenden IP-Netzwerk oder bereits dem sendenden Call-Generator zuzuordnen sind.

Call-Generatoren sind grundsätzlich in zwei verschiedenen Varianten verfügbar - Hardware und Software. Für den Laborbereich von VoIP-Herstellern sowie für Carrier werden vorzugsweise sehr teure, leistungsstarke Hardware-Generatoren eingesetzt. Diese bestehen oft aus speziellen Hardware-Baugruppen und können tausende simultane VoIP-Calls hoher Qualität (isochron) erzeugen. Der Nachteil besteht jedoch darin, dass diese Geräte wegen ihrer Größe und aus Kostengründen nicht für den flexiblen Einsatz bei den oben erwähnten, außerhalb von Testlabors stattfindenden Pre-Deployments geeignet sind.

Alternativ stehen Software-basierte Call-Generatoren zur Verfügung. Dabei wird die Software z.B. auf CDs oder per Download zur Verfügung gestellt. Es liegt dann in der Verantwortung des Benutzers, diese Software auf einen vorhandenen (meist preisgünstigen) Computer (oft Laptop) zu laden bzw. zu installieren. Dieser Signalerzeugungsprozess ist für den Hersteller/Anbieter der Software-basierten Call-Generatoren nicht mehr kontrollierbar - verlässliche Aussagen über die Qualität des später erzeugten Mess-Signals sind somit nicht mehr möglich. Da es sich bei den Computern nicht um Spezialhardware handelt, kann die Stabilität (Isochronität) des erzeugten künstlichen VoIP-Verkehrs in keiner Weise garantiert werden. Obwohl bereits die Erzeugung eines isochronen VoIP-Calls erhebliche Schwierigkeiten mit sich bringt, fassen die Software-basierten Call-Generatoren das Erzeugern zahlreicher gleichzeitiger VoIP-Calls zu.

Die Ursachen für die Instabilität der erzeugten VoIP-Calls sind z.B. in der Leistungsfähigkeit der Hardware (Prozessor, Taktung, Arbeitsspeicher, etc.), im Betriebssystem, bzw. dessen Interrupts (Windows, Linux, etc.), in der Erzeugung der VoIP-Calls und in anderen, auf dem selben Computer im Hintergrund laufenden Anwendungen zu suchen.

Hinsichtlich der Charakteristik der Störungen ist zu sagen, dass diese oft hoch sporadisch und nicht reproduzierbar sind. Es ist weder vorhersagbar, zu welchem Zeitpunkt ein künstlich erzeugter VoIP-Call schlechte Qualität aufweist, noch welcher oder wie viele VoIP-Calls von schlechter Qualität betroffen waren. Man muss also prinzipiell von einem Mess-Signal unbekannter Qualität ausgehen.

Durch die Verwendung eines real oder latent/potentiell instabilen Mess-Signals kann nun auf der Empfangersseite nicht mehr mit Sicherheit gesagt werden, ob eine gemessene schlechte Qualität dem zu untersuchenden IP-Netzwerk zuzuschreiben ist, oder ob sie bereits durch den instabilen Sender (sendender Call-Generator) hervorgerufen wurde. Damit ist das Ergebnis des Pre-Deployments praktisch nicht verwertbar.

Mit Hilfe von Software-basierten Call-Generatoren in Kombination mit einfachen, preisgünstigen Computern ist es nicht möglich, stabile, d.h. isochrone VoIP-Calls zu erzeugen. Somit liegt der Erfindung die Aufgabe zugrunde, einen Weg anzugeben, mit dem die durch instabile Mess-Signale erzeugten Mess-Fehler bei der Qualitätsbestimmung einer IP-Netzwerk-Verbindung vermieden werden können. Die US 2003/048812 beschreibt ein Verfahren nach dem Oberbegriff von Anspruch 1**.**

Obige Aufgabe wird mit den Merkmalen der Patentansprüche gelöst. Dabei geht die Erfindung von dem Grundgedanken aus, dass der Call-Generator die Qualität (z.B. Isochronität, Paketverlust, etc.) der durch ihn erzeugten VoIP-Calls selbst überwacht. Erfindungsgemäß wird demnach die Isochronität (nachfolgend wird die Isochronität stellvertretend auch für alle weiteren Störungen, wie z.B. Puketverlust verwendet) des Call Generators und der daraus abgeleiteten automatischen Reaktion des Call-Generators permanent überwacht.

Gemäß einem ersten Aspekt stellt die Erfindung ein Verfahren zur Qualitätsbestimmung einer IP-Netzwerk-Verbindung bereit. Erfindungsgemäß erzeugt ein Signal-Generator mindestens ein Mess-Signal zur Messung der Qualität einer IP-Netzwerk-Verbindung. Ferner ermittelt der Signal-Generator für jedes der erzeugten mindestens einen Mess-Signale die zugehörige Signal-Qualität des jeweils erzeugten Mess-Signals. Danach wird das mindestens eine Mess-Signal mit der zugehörigen Qualitätsinformation an einen Empfänger über die IP-Netzwerk-Verbindung gleichzeitig übertragen.

Erfindungsgemäß erfolgt durch den, beispielsweise zu einem Signal-Generator der Gegenseite gehörenden Empfänger ein Auswerten des empfangenen mindestens einen Mess-Signals und der zugehörigen Qualitätsinformation. Der Empfänger verwirft anhand der für jedes Mess-Signal übertragenen Qualitätsinformation diejenigen Mess-Signale, deren Qualität bereits bei der Erzeugung durch den Signal-Generator für die Messaufgabe nicht ausreichend ist.

Vorzugsweise überträgt der Signal-Generator die ermittelte Qualitätsinformation am Ende des Mess-Signals. Alternativ überträgt der Signal-Generator die ermittelte Qualitätsinformation am Ende einer ganzen Mess-Signal Serie.

Es ist bevorzugt, dass der Signal-Generator x Mess-Signale gleichzeitig erzeugt.

Gemäß einer bevorzugten Ausführungsform analysiert der Signal-Generator während der Signalübertragung die ermittelte Signalqualität der x erzeugten Mess-Signale und wiederholt die Signalerzeugung, wenn keine ausreichende Anzahl gleichzeitiger Mess-Signale mit ausreichender Qualität erzeugt wurde. Alternativ dazu analysiert der Signal-Generator während der Signalübertragung die ermittelte Signalqualität der x erzeugten Mess-Signale und wiederholt die Signalerzeugung der Mess-Signale mit einer Anzahl kleiner x, wenn keine ausreichende Anzahl gleichzeitiger Mess-Signale mit ausreichender Qualität erzeugt wurde.

Es ist weiter bevorzugt, dass als Qualitätsinformation Informationen ermittelt werden, die den genauen Zeitpunkt der Störung beschreiben.

Erfindungsgemäß ist jedes Mess-Signal ein künstlicher Voice-over-IP Call.

Gemäß einem weiteren Aspekt wird ein System zur Qualitätsbestimmung einer IP-Netzwerk-Verbindung bereitgestellt. Das System weist einem Signal-Generator zur Erzeugung mindestens eines Mess-Signals zur Messung der Qualität einer IP-Netzwerk-Verbindung auf. Der Signal-Generator ermittelt für jedes der erzeugten mindestens einen Mess-Signale die zugehörigen Signal-Qualität des jeweils erzeugten Mess-Signals während der Erzeugung des Mess-Signals und überträgt das mindestens eine Mess-Signal und die zugehörige Qualitätsinformation gleichzeitig an einen, beispielsweise zu einem Signal-Generator der Gegenseite gehörenden Empfänger über die IP-Netzwerk-Verbindung.

Gemäß einem dritten Aspekt stellt die Erfindung einen Signal-Generator zur Qualitätsbestimmung einer IP-Netzwerk-Verbindung bereit. Der erfindungsgemäße Signal-Generator weist eine Einrichtung zum Erzeugen mindestens eines Mess-Signals zur Messung der Qualität einer IP-Netzwerk-Verbindung, eine Einrichtung zum Ermitteln für jedes der erzeugten mindestens einen Mess-Signale zugehörigen Signal-Qualität, eine Einrichtung zum gleichzeitigen Übertragen des mindestens einen Mess-Signals und der zugehörigen Qualitätsinformation und einen beispielsweise zu einem Signal-Generator der Gegenseite gehörigen Empfänger zur Auswertung der über die IP-Netzwerk-Verbindung gesendeten Mess-Signals sowie der dazugehörigen Qualitätsinformationen auf.

Einem weiteren erfindungsgemäßen Aspekt zu Folge wird eine Vorrichtung zum Empfangen und Auswerten mindestens eines über eine IP-Netzwerk-Verbindung übertragenes Mess-Signals und der dazugehörigen Qualitätsinformation bereitgestellt. Die erfindungsgemäße Vorrichtung weist eine Einrichtung auf, die eingerichtet ist, um empfangene Mess-Signale, oder alternativ nur die Sequenzen von empfangenen Mess-Signalen, die bereits bei der Erzeugung nicht die erforderliche Qualität eines Mess-Signals aufweisen konnten, nach Auswertung der dazugehörigen Qualitätsinformation gezielt zu verwerfen.

Ferner stellt die Erfindung ein Verfahren zur Qualitätsbestimmung einer IP-Netzwerk-Verbindung bereit. Das Verfahren weist die Schritte auf: Empfangen, durch einen Signal-Empfänger, mindestens eines Mess-Signals zur Messung der Qualität einer IP-Netzwerk-Verbindung und einer gleichzeitig mit dem mindestens einen Mess-Signals übertragenen zugehörigen senderseitig ermittelten Qualitätsinformation; Auswerten der dazugehörigen Qualitätsinformation; und empfängerseitiges Verwerfen der empfangenen Mess-Signale, oder alternativ nur der Sequenzen von empfangenen Mess-Signalen, die bereits bei der Erzeugung nicht die erforderliche Qualität eines Mess-Signals aufweisen konnten.

Die Erfindung wird nun anhand der beigefügten Figuren näher erläutert. Es zeigen:
- Fig. 1: eine schematische Darstellung einer bevorzugten Ausführungsform des Ereindung;
- Fig. 2: eine schematische Darstellung des erfindungsgemäßen Verfahrens;
- Fig.: 3 eine Flussdiagramm einer weiter bevorzugten Ausführungsform; und
- Fig. 4: eine Flussdiagramm einer alternativen bevorzugten Ausführungsform.

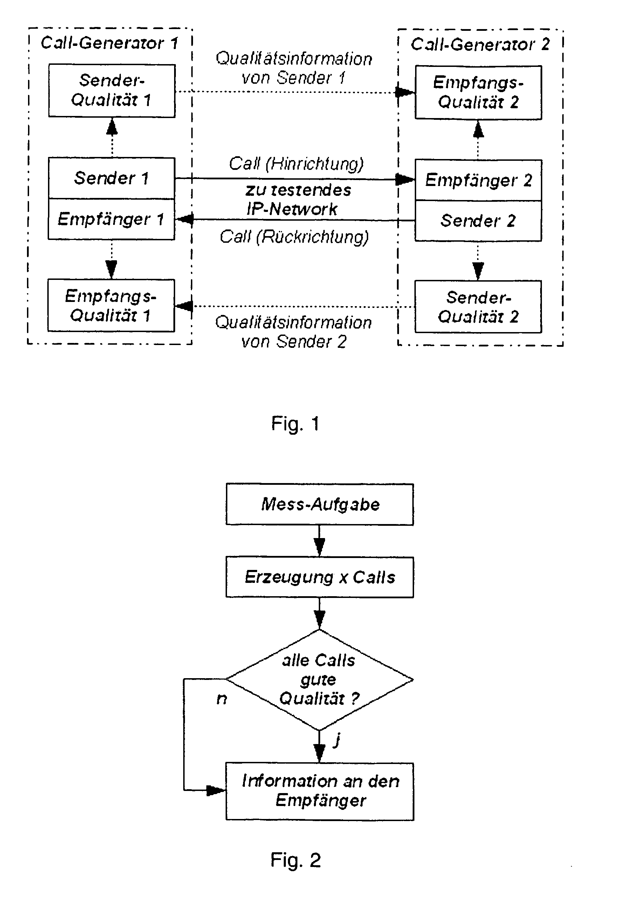

Wie in Fig. 1 gezeigt, besteht eine bevorzugte erfindungsgemäße Ausführungsform darin, dass der Call-Generator bzw. Signal-Generator (z.B. Sender 1) für jeden von ihn gleichzeitig erzeugten VoIP-Call durch Messungen permanent beurteilt, ob dessen Qualität der eines idealen Mess-Signals entspricht, oder nicht. Dies ergibt eine "ja / nein"-Information bezüglich der Sender-Qualität 1).

Diese ja / nein Information zur Qualität wird vorzugsweise Call-bezogen erzeugt. Wird im Verlaufe eines künstlichen VoIP-Calls auch nur einmalig bzw. kurzzeitig vom Call-Generator schlechte Qualität festgestellt, so wird der gesamte VoIP-Call als schlecht gekennzeichnet. Diese senderseitig erzeugte Qualitätsinformation wird nun vom sendenden Call-Generator entweder am Ende des VoIP-Calls oder am Ende der VoIP-Call Serie (Messaufgabe) an den empfangenden CallGenerator (z.B. Empfänger 2) übertragen. Der empfangende Call-Generator ist dadurch in der Lage, aus der Gesamtmenge der empfangenen VoIP-Calls solche gezielt zu verwerfen, die bereits bei Ihrer Erzeugung eine schlechte Qualität aufweisen (z.B. Sender-Qualität 1) und somit für ein Pre-Deployment nicht geeignet sind.

Fig. 1 zeigt zwei Call-Generatoren 1 und 2, die miteinander in Kommunikation stehen. Für einen Call in Hinrichtung, also von Call-Generator 1 zu Call-Generator 2, ist Call-Generator 1 als Sender 1 anzusehen, während Call-Generator 2 der Empfänger 2 ist. Für dieses Signal wird im Call-Generator 1 die Sender-Qualität 1 bestimmt, als Qualitätsinformation bzgl. Sender 1 mit übertragen und im Call-Generator 2 ausgewertet. Ebenso wird dort die Empfangsqualität 2 ermittelt.

In Rückrichtung fungiert dann Call-Generator 2 als Sender 2, dessen Sender-Qualität 2 bestimmt und mit übertragen wird.

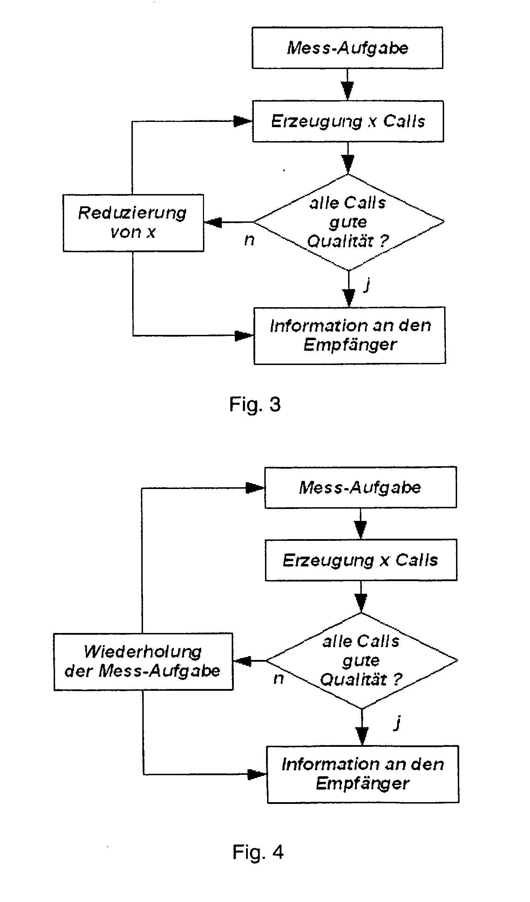

Da der Call-Generator somit erfindungsgemäß ein Wissen über die Qualität der durch ihn erzeugten VoIP-Calls besitzt, kann er weiterhin im Zusammenhang mit der eingestellten Messaufgabe (z.B. Generierung einer bestimmten Anzahl "x" gleichzeitiger VoIP-Calls, siehe Fig. 2) auch ohne eine Qualitätsinformation vom Empfänger entscheiden, ob das gesamte Pre-Deployment erfolgreich bzw. praktisch verwertbar ist. Konnte keine hinreichende Anzahl gleichzeitiger stabiler VoIP-Calls erzeugt werden, entscheidet der Call-Generator automatisch, die Mess-Aufgabe (Pre-Deployment) zu wiederholen (siehe Fig. 4), wobei vorzugsweise die maximal mögliche Anzahl von Wiederholungen der Messaufgabe begrenzt ist.

In jedem Falle läuft die, gleichzeitig zur Erzeugung des Mess-Signals durchgeführte Überwachung der senderseitigen Qualität als ein von der Erzeugung der VoIP-Calls unabhängiger Prozess, um gegenseitige Beeinflussungen auszuschließen.

Neben der reinen Wiederholung der Messaufgabe sind gemäß einer weiter bevorzugten Ausführungsform auch Variationen der Messaufgabe, wie z.B. Verringerung der Anzahl gleichzeitiger VoIP-Calls möglich. Dies ist in Fig. 3 dargestellt. Diese Verringerung der Anzahl gleichzeitiger VoIP-Calls kann entweder im Zuge der Wiederholung der Messaufgabe, oder während der laufenden Messaufgabe erfolgen. Damit kann der Call-Generator in einen Bereich geführt werden, in welchem er ausschließlich isochrone VoIP-Calls erzeugt. Dabei erfolgt eine Abfrage, ob alle Calls eine ausreichend gute Qualität aufweisen. Ist dies nicht der Fall, wird die Anzahl x reduziert und erneut die Erzeugung der Calls gestartet.

Eine weitere erfindungsgemäße Alternative besteht in der Verfeinerung der senderseitigen Qualitätsaussagen zu VoIP-Calls. So ist es denkbar, statt einer reinen ja / nein Information genauere, den exakten Zeitpunkt (z.B. Paketnummer, Zeitstempel) einer Störung des Mess-Signals beinhaltende Informationen an den Empfänger zu liefern. Vorzugsweise wird dabei das Ausmaß der Störung (z.B. Art und Anzahl von Störungen) mit berücksichtigt, um dieses Verfahren nur auf leicht gestörte Mess-Signale anzuwenden und den Überwachungsaufwand für das Mess-Signal auf ein vernünftiges Maß zu beschränken. Der Vorteil einer solchen Lösung besteht darin, dass zumindest auch leicht gestörte Mess-Signale unter Hinzuziehung der vom Call-Generator gelieferten Störungsinformation auf der Empfangsseite des Call-Generators zur Beurteilung des IP-Netzwerkes in Bezug auf dessen VoIP-Fähigkeit verwendet werden können, indem nur die gestörten Sequenzen eines Mess-Signals verworfen werden, nicht jedoch das gesamte Mess-Signal. Dadurch reduziert sich die Anzahl potentieller, im vorhergehenden Abschnitt beschriebener Wiederholungen.

## Patentansprüche

1. Verfahren zur Qualitätsbestimmung einer IP-Netzwerk-Verbindung, mit den Schritten:
Erzeugen, durch einen Signal-Generator, mindestens eines Mess-Signals zur Messung der Qualität einer IP-Netzwerk-Verbindung;
Ermitteln, durch den Signal-Generator, für jedes der erzeugten mindestens einen Mess-Signale der zugehörigen Signal-Qualität des jeweils erzeugten Mess-Signals;
Gleichzeitiges Übertragen des mindestens einen Mess-Signals und der zugehörigen Qualitätsinformation an einen Empfänger über die IP-Netzwerk-Verbindung; und
Auswerten durch den Empfänger des empfangenen mindestens einen Mess-Signals und der zugehörigen Qualitätsinformation, **gekennzeichnet dadurch, dass** der Empfänger anhand der übertragenen Qualitätsinformation für jedes Mess-Signal diejenigen Mess-Signale verwirft, deren Qualität bereits bei der Erzeugung durch den Signal-Generator für die Messaufgabe nicht ausreichend ist.

2. Verfahren nach Anspruch 1, wobei der Signal-Generator die ermittelte Qualitätsinformation am Ende oder während des Mess-Signals überträgt.

3. Verfahren nach einem der vorstehenden Anspruche, wobei der Signal-Generator die ermittelte Qualitätsinformation am Ende oder während einer Mess-Signal-Serie überträgt.

4. Verfahren nach einem der vorstehenden Ansprüche, wobei der Signal-Generator x Mess-Signale gleichzeitig erzeugt.

5. Verfahren nach Anspruch 4, wobei der Signal-Generator während der Signalübertragung die ermittelte Signalqualität der x erzeugten Mess-Signale auf der Sender-Seite analysiert und die Signalerzeugung wiederholt, wenn keine ausreichende Anzahl gleichzeitiger Mess-Signale mit ausreichender Qualität erzeugt wurde.

6. Verfahren nach Anspruch 4, wobei der Signal-Generator während der Signalübertragung die ermittelte Signalqualität der x erzeugten Mess-Signale auf der Sender-Seite analysiert und die Signalerzeugung der Mess-Signale mit einer Anzahl kleiner x wiederholt, wenn keine ausreichende Anzahl gleichzeitiger Mess-Signale mit ausreichender Qualität erzeugt wurde.

7. Verfahren nach einem der vorstehenden Ansprüche, wobei als Qualitätsinformation Informationen ermittelt werden, die den genauen Zeitpunkt und die Art der Störung beschreiben.

8. Verfahren nach einem der vorstehenden Ansprüche, wobei jedes Mess-Signal ein künstlicher Voice-over-IP Call ist.

9. System zur Qualitätsbestimmung einer IP-Netzwerk-Verbindung, mit einem senderseitigen Signal-Generator zur Erzeugung mindestens eines Mess-Signals zur Messung der Qualität einer IP-Netzwerk-Verbindung, wobei der Signal-Generator für jedes der erzeugten mindestens einen Mess-Signale die zugehörige Signal-Qualität des jeweils erzeugten Mess-Signals während seiner Erzeugung auf der Sender-Seite ermittelt und das mindestens eine Mess-Signal und die zugehörige Qualitätsinformation an einen Empfänger über die IP-Netzwerk-Verbindung gleichzeitig überträgt;
**dadurch gekennzeichnet, dass** der Empfänger eingerichtet ist, das empfangene mindestens eine Mess-Signal und die zugehörige Qualitätsinformation auszuwerten, wobei der Empfänger anhand der übertragenen Qualitätsinformation für jedes Mess-Signal diejenigen Mess-Signale verwirft, deren Qualität bereits bei der Erzeugung durch den Signal-Generator für die Messaufgabe nicht ausreichend ist.

10. Vorrichtung zum Empfangen und Auswerten mindestens eines über eine IP-Netzwerk-Verbindung übertragenes Mess-Signals und der dazugehörigen Qualitätsinformation, mit einer Einrichtung, die eingerichtet ist, um empfangene Mess-Signale, oder alternativ nur die Sequenzen von empfangenen Mess-Signalen, die bereits bei der Erzeugung nicht die erforderliche Qualität eines Mess-Signals aufweisen konnten, nach Auswertung der dazugehörigen Qualitätsinformation gezielt zu verwerfen.

11. Verfahren zur Qualitätsbestimmung einer IP-Netzwerk-Verbindung, mit den Schritten:
Empfangen, durch einen Signal-Empfänger, mindestens eines Mess-Signals zur Messung der Qualität einer IP-Netzwerk-Verbindung und einer gleichzeitig mit dem mindestens einen Mess-Signals übertragenen zugehörigen senderseitig ermittelten Qualitätsinformation;
Auswerten der dazugehörigen Qualitätsinformation; und
empfängerseitiges Verwerfen der empfangenen Mess-Signale, oder alternativ nur der Sequenzen von empfangenen Mess-Signalen, die bereits bei der Erzeugung nicht die erforderliche Qualität eines Mess-Signals aufweisen konnten.

## Claims

1. Method for determining the quality of an IP network connection, comprising the steps of:
generating at least one measurement signal for measuring the quality of an IP network connection by means of a signal generator;
determining the associated signal quality of the respectively generated measurement signal by means of the signal generator for each of the generated at least one measurement signal;
simultaneously transmitting the at least one measurement signal and the corresponding quality information to a receiver over the IP network connection; and
analysing the received at least one measurement signal and corresponding quality information by the receiver, **characterised in that** by means of the transmitted quality information for each measurement signal, the receiver discards those measurement signals whose quality is already not sufficient for the measurement task during generation by the signal generator.

2. The method according to claim 1, wherein the signal generator transmits the determined quality information at the end of or during the measurement signal.

3. The method according to any one of the preceding claims, wherein the signal generator transmits the determined quality information at the end of or during a measurement signal series.

4. The method according to any one of the preceding claims, wherein the signal generator simultaneously generates x measurement signals.

5. The method according to claim 4, wherein during the signal transmission, the signal generator analyses the determined signal quality of the x generated measurement signals at the transmitter side and repeats the signal generation when no sufficient number of simultaneous measurement signals with sufficient quality has been generated.

6. The method according to claim 4, wherein during signal transmission, the signal generator analyses the determined signal quality of the x generated measurement signals at the transmitter side and repeats the signal generation of the measurement signals with a number less than x when no sufficient number of simultaneous measurement signals with sufficient quality has been generated.

7. The method according to any one of the preceding claims, wherein as quality information information is determined, describing the exact point of time and type of failure.

8. The method according to any one of the preceding claims, wherein every measurement signal is an artificial Voice over IP call.

9. System for determining the quality of an IP network connection, comprising a signal generator at the transmitter side for generating at least a measurement signal for measuring the quality of an IP network connection, wherein the signal generator determines for each of the generated at least one measurement signal the corresponding signal quality of the respectively generated measurement signal during its generation at the transmitter side and simultaneously transmits the at least one measurement signal and the corresponding quality information to a receiver over the IP network connection; **characterised in that** the receiver is adapted to analyse the received at least one measurement signal and the corresponding quality information, wherein by means of the transmitted quality information for each measurement signal, the receiver discards those measurement signals whose quality is already not sufficient for the measurement task during generation by the signal generator.

10. Device for receiving and analysing at least one measurement signal and the corresponding quality information transmitted via an IP network connection, comprising a means adapted to, after analysing the corresponding quality information, deliberately discard received measurement signals, or alternatively only the sequences of received measurement signals, which could not exhibit the required quality of a measurement signal upon generation.

11. Method for determining the quality of an IP network connection, comprising the steps of:
receiving, by a signal receiver, at least one measurement signal for measuring the quality of an IP network connection and a corresponding quality information determined at the transmitter side transmitted simultaneously with the at least one measurement signal;
analysing the corresponding quality information; and
discarding the received measurement signals at the receiver side, or alternatively only the sequences of received measurement signals, which could not exhibit the required quality of a measurement signal already during generation.

## Revendications

1. Procédé pour déterminer la qualité d'une connexion de réseau IP, comportant les étapes suivantes :
génération par un générateur de signaux d'au moins un signal de mesure pour la mesure de qualité d'une connexion de réseau IP ;
détermination par le générateur de signaux, pour chacun de l'au moins un signal de mesure généré, de la qualité de signal correspondante du signal de mesure respectif généré ;
transmission simultanée du ou des signaux de mesure et de l'information de qualité correspondante à un récepteur par le biais de la connexion de réseau IP, et
évaluation par le récepteur du ou des signaux de mesure reçus et de l'information de qualité correspondante,
**caractérisé en ce que**, sur la base de l'information de qualité transmise pour chaque signal de mesure, le récepteur rejette les signaux de mesure dont la qualité n'est pas satisfaisante dès la génération par le générateur de signaux pour la tâche de mesure.

2. Procédé selon la revendication 1, où le générateur de signaux transmet l'information de qualité déterminée à la fin du signal de mesure ou pendant celui-ci.

3. Procédé selon l'une des revendications précédentes, où le générateur de signaux transmet l'information de qualité déterminée à la fin d'une série de signaux de mesure ou pendant celle-ci.

4. Procédé selon l'une des revendications précédentes, où le générateur de signaux génère simultanément x signaux de mesure.

5. Procédé selon la revendication 4, où le générateur de signaux analyse la qualité de signal déterminée pour les x signaux de mesure générés côté émetteur pendant la transmission de signaux, et répète la génération de signaux si le nombre de signaux de mesure simultanément générés avec une qualité satisfaisante est insuffisant.

6. Procédé selon la revendication 4, où le générateur de signaux analyse la qualité de signal déterminée pour les x signaux de mesure générés côté émetteur pendant la transmission de signaux, et répète la génération des signaux de signaux de mesure avec un nombre inférieur à x si le nombre de signaux de mesure simultanément générés avec une qualité satisfaisante est insuffisant.

7. Procédé selon l'une des revendications précédentes, où des informations de qualité sont déterminées comme informations décrivant le moment précis et le type du défaut.

8. Procédé selon l'une des revendications précédentes, où chaque signal de mesure est un appel Voix sur IP artificiel.

9. Système pour déterminer la qualité d'une connexion de réseau IP, avec
un générateur de signaux côté émetteur destiné à générer au moins un signal de mesure pour la mesure de qualité d'une connexion de réseau IP, le générateur de signaux déterminant, pour chacun de l'au moins un signal de mesure généré, la qualité de signal correspondante du signal de mesure respectif généré, côté émetteur pendant sa génération, et transmettant simultanément le ou les signaux de mesure et l'information de qualité correspondante à un récepteur par le biais de la connexion de réseau IP ;
**caractérisé en ce que** le récepteur est prévu pour évaluer le ou les signaux de mesure reçus et l'information de qualité correspondante, ledit récepteur rejetant, sur la base de l'information de qualité transmise pour chaque signal de mesure, les signaux de mesure dont la qualité n'est pas satisfaisante dès la génération par le générateur de signaux pour la tâche de mesure.

10. Appareil pour la réception et l'évaluation d'au moins un signal de mesure transmis par le biais d'une connexion de réseau IP et de l'information de qualité correspondante, avec un dispositif prévu pour rejeter de manière ciblée des signaux de mesure reçus, ou, de manière alternative, seulement les séquences de signaux de mesure reçus, n'ayant pu présenter la qualité requise pour un signal de mesure dès leur génération, après évaluation de l'information de qualité correspondante.

11. Procédé pour déterminer la qualité d'une connexion de réseau IP, comportant les étapes suivantes :
réception par un récepteur de signaux d'au moins un signal de mesure pour la mesure de qualité d'une connexion de réseau IP et d'une information de qualité correspondante, déterminée côté émetteur, transmise simultanément au signal, ou aux signaux de mesure ;
évaluation de l'information de qualité correspondante ; et
rejet côté récepteur des signaux de mesure reçus, ou, de manière alternative, seulement des séquences de signaux de mesure reçus, n'ayant pu présenter la qualité requise pour un signal de mesure dès leur génération.
